Europäisches Patentamt

European Patent Office

Office européen des brevets

(19)

(11) Veröffentlichungsnummer : **0 016 262**
**B2**

(12) **NEUE EUROPÄISCHE PATENTSCHRIFT**

(45) Veröffentlichungstag der neuen Patentschrift :
21.01.87

(21) Anmeldenummer : 79200113.3

(22) Anmeldetag : 06.03.79

(51) Int. Cl.⁴ : **C 09 K 17/00, C 08 G 83/00**

(54) **Verfahren zum Verfestigen und Abdichten von geologischen und geschütteten Gesteins- und Erdformationen.**

(43) Veröffentlichungstag der Anmeldung :
**01.10.80 Patentblatt 80/20**

(45) Bekanntmachung des Hinweises auf die Patenterteilung : **13.04.83 Patentblatt 83/15**

(45) Bekanntmachung des Hinweises auf die Entscheidung
über den Einspruch : **21.01.87 Patentblatt 87/04**

(84) Benannte Vertragsstaaten :
**BE CH DE FR GB IT LU SE**

(56) Entgegenhaltungen :
**EP-A- 0 000 579**
**EP-A- 0 000 580**
**DE-A- 1 770 384**
**DE-A- 2 460 834**
**DE-A- 2 512 170**
**DE-B- 1 914 554**
**FR-A- 2 109 614**
**FR-A- 2 279 891**
**NL-A- 7 600 151**
**US-A- 4 113 014**
**165 USPQ S. 29-31**
**133 USPQ S. 207-209**

(73) Patentinhaber : **Bergwerksverband GmbH**
**Franz-Fischer-Weg 61**
**D-4300 Essen 13 (DE)**

**BAYER AG**
**Konzernverwaltung RP Patentabteilung**
**D-5090 Leverkusen 1 Bayerwerk (DE)**

(72) Erfinder : **Meyer, Frank, Dr.**
**Potthoffs Börde 22**
**D-4300 Essen 1 (DE)**
Erfinder : **Kubens, Rolf, Dr.**
**Carl-Leverkus-Strasse 1**
**D-5074 Odenthal (DE)**
Erfinder : **Mehesch, Hans, Dr.**
**Ernestinenstrasse 220**
**D-4300 Essen (DE)**

(74) Vertreter : **Frühbuss, Heinrich, Dr.rer.nat.**
**Hubert-Reissner-Strasse 5a**
**D-8032 Gräfelfing b. München (DE)**

**Beschreibung**

Das Verfestigen und Abdichten von geologischen und geschütteten Gesteins- und Erdformationen erfolgt im Untertage-Kohlenbergbau in sehr großem Umfang mittels Polyurethansystemen, vergl.
Zeitschrift Glückauf (1968), S. 666-670 ;
Zeitschrift Glückauf (1977), S. 707-711 ;
Zeitschrift Bergbau (1977), S. 124-129 ;
DE-A-1 758 185 ; DE-A-1 784 458.

In der Regel werden Zweikomponenten-Polyurethansysteme in die zu verfestigenden Formationen eingepreßt, wobei im allgemeinen einerseits technische Polyisocyanate und andererseits Polyole mit einem Molekulargewicht von 400-600 und einer OH-Zahl von 350 bis 400 als Ausgangskomponente dienen. Gemäß DE-A-2 436 029 werden die Polyole mit Polyolen einer OH-Zahl zwischen 50 und 90 und einem Molekulargewicht von 2 000-35 000 flexibilisiert.

Eine natürliche Begrenzung der Einsatzmöglichkeiten von Polyurethan sind wasserführende Gebirgsformationen, da durch das Wasser das Polyisocyanat zerstört und damit das stöchiometrische Verhältnis der Reaktionspartner entscheidend gestört wird. Darüber hinaus bildet sich aus Wasser und Polyisocyanat vorzugsweise Polyharnstoff, der in Spalten und Rissen des Gebirges nicht haftet. Immer wieder wird darauf hingewiesen, daß bei Verfestigungsarbeiten mit Polyurethan von den zu verfestigenden Gebirgszonen das Wasser ferngehalten werden soll. Vergl. Zeitschrift Glückauf (1972), S. 10-13.

Ein grundsätzlicher Nachteil der Verwendung von Polyurethan im Kohlenbergbau liegt darin, daß das ausgehärtete Produkt leicht brennt. Befinden sich größere Mengen von ausgehärtetem Polyurethan in Kohlespalten, so können Selbstentzündungsbrände von Kohle durch das Polyurethan weiter ausgebreitet werden. Man hat daher versucht, die Nachteile des Polyurethans zu überwinden, indem man Systeme verwendet hat, die praktisch unbrennbar sind und in wäßriger Form vorliegen, damit auch in feuchten und nassen Formationen verfestigt werden kann.

So sind z. B. Versuche in erheblichem Umfang mit wäßrigen Formaldehyd-Harnstoff-Lösungen gemacht worden. Es konnte mit diesen Systemen aber keine ausreichende Verfestigung erzielt werden, da beim Aushärtevorgang die entstehenden Produkte sehr stark schrumpfen.

Weiterhin ist versucht worden, Wasserglaslösungen zum Verfestigen einzusetzen. Wasserglaslösungen erfordern zum Aushärten Zusätze von Härtungsmitteln. Verwendet werden saure oder Säure bildende Stoffe wie Phosphorsäure, Sulfonsäure, Ester wie. z. B. Glycerintriacetat, Äthylacetat sowie andere organische Stoffe wie Formamid, Glyoxal. Weiterhin werden als Härter Calciumchlorid, Aluminiumsulfat, Magnesiumchlorid, Magnesiumsulfat, Aluminiumchlorid und Silicofluoride benutzt.

Nach diesen Verfahren lassen sich zwar gröbere Mittelsande und Kiese z. B. zum Zweck der Baugrundkonsolidierung bis zu einem gewissen Grade verfestigen ; Verfestigungen mit hohem Verfestigungsgrade sind damit nicht möglich, da beim Aushärten von Wasserglas ein erheblicher Volumenschwund auftritt und infolgedessen der Verbundkörper sich von den Oberflächen der Risse und Spalten ablöst.

Die vorliegenden Erfindung löst die Aufgabe, ein Verfahren zum Verfestigen und Abdichten von geologischen und geschütteten Gesteins- und Erdformationen zu schaffen, das die beschriebenen Nachteile der Verfestigungsverfahren des Standes der Technik vermeidet, befriedigende Verfestigungswerte erzielt, Unempfindlichkeit gegenüber Feuchtigkeit aufweist und nicht brennbar ist.

Diese Aufgabe wird erfindungsgemäss dadurch gelöst, dass man Wasserglaslösungen und Polyisocyanate, ausgewählt aus der Gruppe bestehend aus (i) Polyphenyl-Polymethylen-Polyisocyanaten, wie sie durch Anilin/Formaldehyd-Kondensation und anschließende Phosgenierung hergestellt werden, und (ii) Carbodiimidgruppen, Biuretgruppen, Urethangruppen oder Allophanatgruppen aufweisende, bei Raumtemperatur flüssigen Derivaten dieser Polyisocyanate, innig miteinander vermischt und diese Emulsion über Bohrlöcher oder Injektionslanzen in die zu verfestigende geologische Formation unter Druck einbringt und in der zu verfestigenden Formation aushärten läßt. Die Haftung des sich bildenden Feststoffes auf trockenen und nassen geologischen Formationen ist ausgezeichnet, zumal die beim Aushärten von Wasserglaslösungen ohne Polyisocyanatzugabe auftretende Schrumpfung überhaupt nicht eintritt und stattdessen durch eine gewisse Volumenvergrößerung während der Härtung die Haftung begünstigt wird. Von besonderem Vorteil für den Kohlenbergbau ist, daß das ausgehärtete Verfestigungsmittel nicht entflammbar ist und eine für die Stabilisierung der Formation hervorragende Festigkeit der in Spalten und dergl. sich bildenden Verbundkörper erreicht.

Überraschenderweise haften ausgehärtete Verbundkörper auch an fettiger, also verhältnismäßig stark bitumenhaltiger Kohle, so daß in jeder Art von Kohle eine gute Verfestigung erreicht wird.

Als erfindungsgemäß geeignete Polyisocyanate kommen organische Polyisocyanate mit aliphatisch, cycloaliphatisch, araliphatisch, aromatisch oder heterocyclisch gebundenen Polyisocyanatgruppen in Betracht, wie sie z. B. von W. Siefken in « Justus Liebigs Annalen der Chemie », 562, Seiten 75-136, beschrieben werden. Insbesondere werden jedoch die in der Polyurethan-Chemie üblichen, bei Raumtemperatur flüssigen Polyisocyanate mit aromatisch gebundenen Polyisocyanatgruppen eingesetzt, wie z. B. 2,4-Diisocyanatotoluol, 2,6-Diisocyanatotoluol, sowie beliebige Gemische dieser Isomeren (« TDI »), Polyphenyl-Polymethylen-Polyisocyanate, wie sie durch Anilin/Formaldehyd-Kondensation und anschließende Phosgenierung hergestellt werden (« MDI ») oder auch Cabodiimidgruppen, Biuretgruppen, Urethangruppen oder Allophanatgruppen aufweisende, bei Raumtemperatur flüssige Derivate dieser Polyisocyanate. Das bei Raumtemperatur flüssige, durch Phosgenierung von Anilin/Formaldehyd-Kondensaten erhaltene Polyisocyanatgemisch (« MDI ») sowie dessen flüssige, NCO-Gruppen aufweisende Umsetzungsprodukte mit unterschüssigen Mengen (NCO-OH-Molverhältnis 1 : 0,005-1 : 0,3) an mehrwertigen Alkoholen des Molekulargewichtsbereiches 62-3000, insbesondere an Äthergruppen ausweisenden Polyolen des Molekulargewichtsbereiches 134-3000 sind besonders bevorzugt.

Unter Wasserglaslösungen sind Lösungen von Natrium- und/oder Kaliumsilikat in Wasser zu verstehen. Es können auch rohe technische Produkte, welche z. B. Calciumsilikat, Magnesiumsilikat, Borate und Aluminate enthalten können, verwendet werden. Das Molverhältnis $SiO_2 : M_2O$ (M = Metall) kann in den Grenzen 0,5 : 1 bis 4 : 1 schwanken. Vorzugsweise werden Wasserglaslösungen mit einem Verhältnis $SiO_2 : M_2O$ von 1 : 1 bis 2,5 : 1 eingesetzt. Die Konzentration der Wasserglaslösung kann zwischen 25 bis 55 Gew.-%, vorzugsweise zwischen 40 bis 50 Gew.-%, gewählt werden.

Das Gewichtsverhältnis zwischen Polyisocyanat und Wasserglas in dem zu bildenden Gemisch kann innerhalb weiter Grenzen liegen, nämlich zwischen 75 zu 25 bis 15 : 85. Vorzugsweise wird ein Gewichtsverhältnis von Polyisocyanat zu Wasserglas von 60 : 40 bis 25 : 75 gewählt.

Die Bereitung der Mischung aus Polyisocyanaten und Wasserglaslösungen ist einfach. Es ist lediglich erforderlich, die beiden Flüssigkeiten homogen zu vermischen, z. B. durch Rühren mittels Rührlatten von Hand oder durch motorgetriebene Rührwerke, die handelsüblich sind. Es ist auch möglich, die Emulsion auf Mischdosiereinrichtungen zu bereiten. Hierbei werden die beiden Flüssigkeiten mittels Dosierpumpen einem Durchlaufmischer zugeführt. Als Dosierpumpe können z. B. Zahnradpumpen, Kolbenpumpen oder Membranpumpen dienen. Als Durchlaufmischer sind z. B. Mischkammern mit angetriebenem Rührwerk oder Statikmischer geeignet, z. B. Rohre mit verschiedenartig angeordneten Prallblechen.

Die Mischung wird in der Regel über Lanzen oder Rohre in die Formation oder erforderlichenfalls in darin eingebrachte Bohrlöcher eingepreßt. Bohrlöcher sind nach dem Einpressen sofort zu verschließen, da eine Gelierung und anschließende Aushärtung der Mischung erst nach 30 bis 60 sec in Gang kommt. Zweckmäßigerweise erfolgt die Einführung der Mischung Bohrlöcher über als Ventil wirkende Bohrlochverschlüsse z. B. gemäß DE-A-2 550 555.

Je nach Art des verwendeten Polyisocyanates, des gewählten Mischverfahrens, des gewünschten mehr oder weniger ausgeprägten Aufschäumens des Verfestigungsmittels und dessen Konsistenz kann es zweckmäßig sein, dem Polyisocyanat oder der Wasserglaslösung oder dem Gemisch aus Polyisocyanat und Wasserglaslösung die folgenden Zusatzstoffe zuzusetzen :

1. Beschleuniger, wie sie aus der Polyurethanchemie bekannt sind. Als Beispiele seien metallorganische Verbindungen wie Dibutylzinndilaurat oder tertiäre Amine wie Triäthylamin genannt. Die Zusatzmengen können bis zu ca. 2 Gew.-%, bezogen auf Polyisocyanat/Wasserglaslösunggemisch, betragen.

2. Treibmittel wie z. B. Aceton, Methylenchlorid, Monofluortrichlormethan, Dichloridfluormethan, Butan. Die Zusatzmengen können bis zu 30 Gew.-%, bezogen auf Polyisocyanat/Wasserglaslösungsge-misch, betragen.

3. Verbindungen, die mindestens eine gegenüber Polyisocyanat reaktionsfähige Gruppe besitzen. Diese Verbindungen werden dem Reaktionsgemisch im allgemeinen in Mengen von bis zu 30 Gew.-%, bezogen auf die Wasserglaslösung, zugesetzt. In Frage kommen organische Polyamine wie z. B. Äthylendiamin, Diäthylentriamin, Triäthylentetramin, 4,4'-Diaminodiphenylmethan oder 2,4'-Diaminotolu-ol, bevorzugt jedoch organische Verbindungen mit alkoholischen Hydroxylgruppen. Hierzu gehörend einfache, ein- oder mehrwertige, vorzugsweise mehrwertige Alkohole des Molekulargewichtsbereiches 32-200, vorzugsweise 62-200 oder die in der Polyurethan-Chemie an sich üblichen höhermolekularen Polyhydroxylverbindungen des Molekulargewichtsbereiches 200-5000, vorzugsweise 200-1000, wie z. B. die an sich bekannten Polyhydroxypolyester oder Polyhydroxypolyäther wie z. B. Polyäther- oder Polyesterpolyole des OH-Zahl-Bereiches von 50-600. Beispiele geeigneter niedermolekularer Alkohole sind Methanol, Äthanol, Propanol, Äthylenglykol, Diäthylenglykol, Triäthylenglykol, Glycerin oder Trimethylolpropan. Beispiele höhermolekularer Alkohole sind Polyester aus Decarbonsäuren, wie z. B. Phthalsäure, Adipinsäure, Hexahydrophthalsäure, Tetrahydrophthalsäure und/oder Maleinsäure und den oben genannten einfachen Alkoholen oder Polyätherpolyole, wie sie durch Alkoxylierung, d. h. insbesondere durch Anlagerung von Propylenoxid und/oder Äthylenoxid an niedermolekulare Startermoleküle erhältlich sind. Geeignete Startermoleküle sind Wasser oder beispielsweise die obengenannten, mindestens zwei aktive Wasserstoffatome aufweisenden niedermolekularen Amine oder Alkohole.

Besonders bevorzugte Alkohole sind die zuletzt genannten Polyätherpolyole des OH-Zahl-Bereiches von 50-600. Die Alkohole können entweder der Wasserglaslösung oder dem Polyisocyanat oder als Drittkomponente dem Polyisocyanat/Wasserglasgemisch zudosiert werden. Mischungen mit Zusätzen der vorstehend aufgeführten Verbindungen ergeben die bislang besten Verfestigungswerte und stellen daher eine besonders bevorzugte Ausführungsform der Erfindung dar.

4. Emulgatoren wie z. B. Umsetzungsprodukte aus Stearylamin und Äthylenoxid, Polyätherester aus Abietin- bzw. Ölsäure und Athylenoxid, Fettalkoholpolyglykoläther, Alkylphenolpolyglykoläther, Emulgatoren auf Wasserglasbasis, z. B. Tegosivin der Fa. Goldtschmit AG, Amphogenside, z. B. Tego-Betain 27 der Fa. Goldtschmit AG, Fettsäureamidoalkyldimethylamindonoxid, z. B. Aminoxid WS 25 der Fa. Goldtschmit AG. Derartige Emulgatoren begünstigen besonders die Emulgierung der Verbindung gemäß Kategorie 3 in der Wasserglaskomponente und damit auch die Vollständigkeit der Vermischung aller Komponenten. Die Emulgatoren werden im allgemeinen in Mengen bis zu 15 Gew.-%, bezogen auf Polyisocyanat/Wasserglaslösungsgemisch, zugesetzt.

5. Thixotropiermittel wie z. B. Asbestmehl oder andere oberflächenaktive Zusatzmittel allein oder im Gemisch mit den unter Kategorie 4 genannten Emulgatoren. Diese Thixotropiermittel werden vorzugsweise verwendet, wenn man Gemische aus Wasserglaslösung und die unter Kategorie 3 genannten Verbindungen einsetzt. Auch lassen sich damit über längere Zeit stabile Emulsionen herstellen, so daß am Ort der Verfestigung Zweikomponentensysteme aus Wasserglaslösung und Zusätze der Kategorie 1-4 einerseits und Polyisocyanate andererseits gehandhabt werden können. Die Thixotropiermittel werden im allgemeinen in Mengen bis zu 5 Gew.-%, bezogen auf Polyisocyanat-Wasserglaslösungsgemisch, zugesetzt.

6. Schaumstabilisatoren wie z. B. Organopolysiloxane, wie sie aus der Polyurethan-Chemie bekannt sind.

Alle vorgenannten Zusatzstoffe können entweder als alleinige Zusätze oder in Kombination miteinander der Mischung oder den Komponente vor ihrer Vermischung zugesetzt werden.

Weiterhin ist es möglich, in die erwähnten Bohrlöcher Mehrkammerpatronen einzuführen, die das Polyisocyanat, die Wasserglaslösung und gegebenenfalls Zusatzstoffe nach Kategorie 1-6 in getrennten Behältern enthalten. Nach mechanischer Zerstörung der Patronen und Vermischen der flüssigen Inhaltsstoffe z. B durch einen rotierenden Holz- oder Metallnagel oder eine Ankerstange, dringt das aufschäumend erhärtende Gemisch unter dem eigenen Schaumdruck in die zu verfestigenden und abzudichtenden Formationen ein und füllt gleichzeitig auch das Bohrloch vollständig aus.

Eine Übersicht über beispielsweise in Frage kommende Mischungen und über die praktische Anwendung des Verfahrens geben die nachfolgende Tabelle und die Beispiele.

Im einzelnen bedeutet :

MDI ein durch Phosgenierung eines Formaldehyd-Anilin-Kondensates erhaltenes Polyisocyanat, das zu mehr als 50 % aus Diisocyanatodiphenylmethan besteht mit einem Isocyanatgehalt von 31 % und einer Viskosität von 95 mPa·s bei 25 °C.

Beschleuniger Dibutylzinndilaurat

Polyol 1 ein Polyätherpolyol, hergestellt aus Trimethylolpropan und Propylenoxid mit einer OH-Zahl von 370 und einer Viskosität von 700 mPa·s bei 25 °C

Polyol 2 ein Polyätherpolyol, hergestellt aus 1,2-Propylenglykol und Propylenoxid mit einer OH-Zahl von 59 und einer Viskosität von 410 mPa·s bei 25 °C

Emulgator ein handelsüblicher Alkylphenolpolyglykoläther (Akyporox NP 105, Fa. Chemy, Emmerich) Asbestmehl ein handelsübliches Erzeugnis der Fa. Crace (Silodex 24)

Stabilisator ein handelsüblicher Polyätherpolysiloxan-Stabilisator (Stabilisator SJ, Bayer AG)

Tabelle

| Komponente A | | Komponente B | Gewichtsver-hältnis Wasser-glas : Isocyanat | Molverhältnis $SiO_2 : Na_2O$ |
|---|---|---|---|---|
| 1.) | | | | |
| 80 g | Wasserglas 44% | 90 g MDI | 80 : 90 | 2 : 1 |
| 20 g | Polyol 1 | | | |
| | | | | |
| 2.) | | | | |
| 40 g | Wasserglas 44% | 60 g MDI | 40 : 60 | 2 : 1 |
| 10 g | Polyol 1 | | | |
| 0,9 g | Beschleuniger | | | |
| 10 g | Treibmittel | | | |
| | | | | |
| 3.) | | | | |
| 80 g | Wasserglas 44% | 75 g MDI | 80 : 75 | 0,5 : 1 |
| 20 g | Polyol 1 | | | |
| 0,6 g | Beschleuniger | | | |
| 0,5 g | Stabilisator | | | |
| | | | | |
| 4.) | | | | |
| 75 g | Wasserglas 44% | 25 g MDI | 75 : 25 | 2 : 1 |
| 25 g | Polyol 1 | | | |
| 1,6 g | Beschleuniger | | | |

Tabelle (Fortsetzung)

| Komponente A | | Komponente B | Gewichtsver-hältnis Wasser-glas : Isocyanat | Molverhältnis $SiO_2$ : $Na_2O$ |
|---|---|---|---|---|
| 5.)<br>80 g<br>15 g<br>5 g<br>2 g | Wasserglas 50%<br>Polyol 1<br>Polyol 2<br>Beschleuniger | 86 g MDI | 80 : 86 | 2 : 1 |
| 6.)<br>50 g<br>30 g<br>2 g | Wasserglas 28%<br>Polyol 1<br>Beschleuniger | 40 g MDI | 50 : 40 | 4 : 1 |
| 7.)<br>25 g<br>6,25 g | Wasserglas 44%<br>Polyol 1 | 75 g MDI | 25 : 75 | 2 : 1 |
| 8.)<br>50 g<br>40 g<br>10 g<br>0,5 g | Wasserglas 28%<br>Polyol 1<br>Polyol 2<br>Beschleuniger | 50 g MDI | 50 : 50 | 2 : 1 |
| 9.)<br>80 g<br>20 g<br>10 g<br>1 g | Wasserglas 44%<br>Polyol 1<br>Polyol 2<br>Beschleuniger | 72 g MDI | 80 : 72 | 1 : 1 |
| 10.)<br>90 g<br>10 g<br>30 g<br>0,6 g | Wasserglas 44%<br>Polyol 1<br>Treibmittel<br>Beschleuniger | 90 g MDI | 90 : 90 | 2 : 1 |
| 11.)<br>80 g<br>20 g<br>0,3 g<br>1,0 g<br>1,0 g | Wasserglas 44%<br>Polyol 1<br>Beschleuniger<br>Emulgator<br>Asbestmehl | 51 g MDI | 80 : 51 | 2 : 1 |
| 12.)<br>80 g<br>15 g<br>5 g<br>0,3 g<br>1,0 g<br>1,0 g<br>1,0 g | Wasserglas 44%<br>Polyol 1<br>Polyol 2<br>Beschleuniger<br>Emulgator<br>Asbestmehl<br>Stabilisator | 90 g MDI | 80 : 90 | 2 : 1 |

In den nachfolgenden Beispielen wurde als Wasserglas eine 44gewichtsprozentige wäßrige Lösung eines Natriumsilikats ($SiO_2$ : $Na_2O$ = 2 : 1) verwendet.

Beispiel 1

Zu einem Flöz mit 0-10 gon Einfallen und einer mittleren Mächtigkeit von 4 m böschte der Kohlenstoß im Streb bis zu 3,50 m ab. Daraus resultierten Hangendausbrüche bis zu 7 m Höhe und 30 m Länge. Es wurden im Abstand von 7 m Bohrlöcher von 4,5 m Länge und 45 mm Durchmesser in den Kohlenstoß

5

gebohrt.

Als Verfestigungsmittel dienten :

Komponente A : Wasserglas
Komponente B : MDI

Die Komponenten A und B wurden im Gewichtsverhältnis 1 : 1 über eine Zweikomponente-Misch- und Verpreßeinrichtung über einen Bohrlochverschluß in die Bohrlöcher eingepreßt, so daß in jedes Bohrloch 120 kg Gemisch aus Komponente A und B gelangten.

Nach 5 Stunden wurde der verfestigte Bereich mittels einer Schrämmwalze abgebaut. Es zeigt sich, daß die Oberfläche der Spalten und Risse in der Kohle verklebt waren und ein guter Verfestigungseffekt erzielt worden war. Der Kohlenstoß böschte nur noch geringfügig ab und der normale Produktionsbetrieb konnte fortgesetzt werden.

## Beispiel 2

Im gleichen Abbaubetrieb gemäß Beispiel 1 wurden die Verfestigungsarbeiten an der Störzone in gleicher Weise wie in Beispiel 1 beschrieben fortgeführt mit dem Unterschied, daß dem Verfestigungsmittel zusätzlich ein Polyol zugesetzt wurde. Das Verfestigungsmittel bestand aus den folgenden Komponenten :

Komponente A : Gemisch aus
    80 Gew.-Teilen Wasserglas
    20 Gew.-Teilen Polyol 1
    0,3 Gew.-Teilen Beschleuniger

Die Komponente A wurde aus den o. a. Bestandteilen unmittelbar vor dem Injizieren durch Vermischen mittels mechanischem Rührwerk hergestellt. Die so erhaltene Emulsion war mehrere Stunden lang lagerstabil.

Komponente B : MDI

Der Kohlenstoß wurde gemäß Beispiel 1 verfestigt ; das Gewichtsverhältnis der Komponenten A und B betrug 1,3 : 1.

Der Verfestigungseffekt war vollkommen. Jegliches Abböschen des Kohlenstoßes blieb aus.

## Beispiel 3

Beim Abbau eines Flözes mit einer Mächtigkeit von 1,3 m und einem Einfallen von 0-59 gon sollte der Streckensaum verfestigt werden. Das Hangende bestand aus festem Bänderschieferton, das Liegende war Sandstein. Das Strebhangende war im Bereich des Übergangs Streb/Strecke im Einfallen gemessen auf einer Länge von 1,5-2 m sehr stark aufgelockert. Es wurden Spaltbreiten bis zu 2 cm festgestellt. Für das Verfestigen wurden Bohrlöcher 60 cm über dem Flöz mit einer Länge von 2,5 m und 45 mm Ø erstellt. Der Abstand der Bohrlöcher in Streckenrichtung war 2,5-3 m. Insgesamt wurden zunächst 4 Bohrlöcher gebohrt.

Als Verfestigungsmittel diente :

Komponente A : Gemisch aus

    90 Gew.-Teilen Wasserglas
    10 Gew.-Teilen Polyol 2
    1 Gew.-Teil Beschleuniger

Komponente B : MDI

In das erste Bohrloch wurden 90 kg der Mischung A und B (Gewichtsverhältnis 1,5 : 1) mittels einer Verpreßeinrichtung eingebracht. In das zweite Bohrloch wurden 260 kg, in das dritte Bohrloch 350 kg und in das vierte Bohrloch 129 kg eingepreßt. Die Verfestigungsergebnisse waren so gut, daß im Übergangsbereich Streb/Strecke keinerlei Ausbrüche auftraten. Im Bruch gefundene Gesteinproben zeigten, daß Risse und Spalten im Gebirge mit dem ausgehärteten Schaum aus den Komponente A und B völlig ausgefüllt und sehr gut verklebt waren.

## Beispiel 4

In einem Rückbaubetrieb sollte der Übergangsbereich Streb/Strecke bis zu 15 m vor dem Streb mit

6

Polyurethan verfestigt werden. Da in diesem Bereich das Gebirge sehr naß war und die Spalten und Risse mit Wasser gefüllt waren, konnte mit dem bekannten Polyurethan-System kein ausreichender Verfestigungseffekt erzielt werden. Es wurde dann im Abstand von 5 m vor der Strebfront Bohrlöcher mit 5 m Länge und 10° ansteigend in das Hangende gebohrt. Über diese Bohrlöcher wurden nun insgesamt 1 000 kg folgender Mischung eingebracht :

Komponente A : Gemisch aus

80 Gew.-Teilen Wasserglas
10 Gew.-Teilen Polyol 1
10 Gew.-Teilen Polyol 2
5 Gew.-Teilen Emulgator
1 Gew.-Teil Beschleuniger
1 Gew.-Teil Asbestmehl

Komponente B : MDI

Das Gewichtsverhältnis der Komponenten A und B betrug 1 : 1,2.
Beim Durchfahren der verfestigten Störungszone in der Strecke zeigte sich, daß die im nichtverfestigten Bereich aufgetretenen Hangendausbrüche völlig ausblieben.

## Beispiel 5

Auf einer U-Bahn-Baustelle wurden Grundwasser und Fließsände beim Ausheben des Erdreiches aus einem Spalt (15 m hoch, 0,7 m breit) heraus in den Tunnelraum gespült. Versuche, den Fließsand durch Injektion in die Wände mit Zement oder Wasserglas zu verfestigen, brachten keinen Erfolg. Über Injektionslanzen, die in den Fließsand eingebracht waren, wurde mit einer Injektionseinrichtung folgende Wasserglas-Polyisocyanatmischung eingebracht :

Komponente A : Gemisch aus

80 Gew.-Teilen Wasserglas
1 Gew.-Teil Beschleuniger

Komponente B : Umsetzungsprodukt von 90 Gew.-Teilen MDI mit 10 Gew.-Teilen Polypropylenglykol der OH-Zahl 56.

Das Gewichtsverhältnis der Komponenten A und B betrug 1 : 1. Insgesamt wurden 100 kg dieser Mischung über die Lanze in die Schlitzwand injiziert. Bereits nach 15 Minuten zeigte sich, daß der Fließsand verfestigt war. Unterhalb des ersten Injektionspunktes wurde eine weitere Injektionslanze 1 300 mm tief in den Fließsand eingebracht. Über diese Lanze wurden 70 kg des Gemisches aus den Komponenten A und B mit einem Druck von 50 bar verpreßt. Mit dieser zusätzlichen Injektion gelang es, die Wand in dem durch die Injektion verfestigten Bereich gegen Wasser und Fließsand abzudichten. Probekörper aus dem verfestigten Fließsand ergaben Festigkeiten von ca. 12 kg/cm$^2$ (11,8 bar).

## Beispiel 6

In einem Flöz mit einer mittleren Mächtigkeit von 2,80 m und einem Einfallen von 5 gon böschte der Kohlenstoff auf einer Länge von 40 m von der Kopfstrecke gemessen bis zu 3,50 m ab. Dadurch wurden Hangendausbrüche hervorgerufen, die die Förderung des gesamten Strebes stark beeinträchtigten. Die entstandenen Hohlräume mußten mit Holz ausgepfeilert werden und weiterhin mußte von Hand vorgekohlt werden.

In dem kritischen Bereich wurden im Kohlenstoß im Abstand von 1,5 m und ca. 0,5 m unter dem Hangenden Bohrlöcher vom Durchmesser 50 mm mit ca. 10 gon Neigung erstellt. In die Bohrlöcher wurden je 6 Zweikammer-Patronen aus Polyäthylen eingeschoben. Die innere Kammer der Patrone enthielt das Polyisocyanat, die äußere Kammer enthielt folgende Komponente :

90 g Wasserglas
10 g Polyol 1
0,6 g Beschleuniger Di-Butylzinndilaurat

In der Patrone lagen beide Komponenten im Gewichtsverhältnis 1 : 1 vor. Die Patronen wurden in den Bohrlöchern mit Hilfe von rechteckigen Holznägeln mit einer Katenlänge von 32 mm zerstört. Durch Drehen der Holznägel wurden die Komponenten gut vermischt, woraufhin die Bohrlöcher mit einem Stopfen zugeschlagen wurden. Beim Abbau nach 2 1/2 Stunden zeigte sich, daß durch den Verfestigungseffekt das Abböschen des Kohlenstoßes verhindert werden konnte.

Beispiel 7

Als Patrone dient ein Glasrohr von 60 cm Länge, einem Innendurchmesser von 2,6 cm und einer Wandstärke von 1 mm. Dieses Rohr ist mit 200 g folgender Mischung gefüllt :

160 g Wasserglas
40 g Polyol 1

In diesem Rohr befindet sich ein weiteres zugeschmolzenes Glasrohr von 59 cm Länge, 1,6 cm Innendurchmesser und 1 mm Wandstärke als Innenpatrone. Diese Innenpatrone ist mit 102 g eines Polyisocyanatgemisches der Diphenylmethan-Reihe mit einer Viskosität von 100 mPa·s/25 °C und einem NCO-Gehalt von 32 Gew.-% gefüllt.

Die mit einem Plastikstopfen verschlossene Patrone wurde in ein Bohrloch von 30 mm Durchmesser eingeführt. Mit einer Umdrehungszahl von 350 U/min wurde eine Ankerstange von 24 mm Durchmesser in das Bohrloch eingestoßen. Die Patrone wurde dadurch zerstört und die Komponenten innig vermischt. Die Verklebungslänge betrug 110 cm. Nach 30 Minuten wurde die Ankerstange gezogen. Erst bei einer Zugbelastung von 24 t wurde die Ankerstange aus dem Bohrloch gezogen.

## Patentansprüche

1. Verfahren zum Verfestigen und Abdichten von geologischen Gesteinsformationen sowie Kohle in Untertage-Kohlenbergbau, dadurch gekennzeichnet, daß man Wasserglaslösungen und Polyisocyanate, ausgewählt aus der Gruppe bestehend aus (i) Polyphenyl-Polymethylen-Polyisocyanaten, wie sie durch Anilin/Formaldehyd-Kondensation und anschließende Phosgenierung hergestellt werden, und (ii) Carbodiimidgruppen, Biuretgruppen, Urethangruppen oder Allophanatgruppen aufweisende, bei Raumtemperatur flüssigen Derivaten dieser Polyisocyanate, innig miteinander vermischt und diese Emulsion über Bohrlöcher oder Injektionslanzen in die zu verfestigende geologische Formation unter Druck einbringt und in der zu verfestigenden Formation aushärten läßt.

2. Verfahren nach Anspruch 1, dadurch gekennzeichnet, daß das Gewichtsverhältnis von Polyisocyanat zu Wasserglaslösung zwischen 75 : 25 bis 15 : 85, vorzugsweise 60 : 40 bis 25 : 75, liegt.

3. Verfahren nach Anspruch 1 und 2, dadurch gekennzeichnet, daß der Emulsion bis zu 2 Gew.-% aus der Polyurethanchemie bekannte Beschleuniger, vorzugsweise metallorganische Verbindungen oder tert. Amine zugesetzt werden.

4. Verfahren nach Anspruch 1 bis 3, dadurch gekennzeichnet, daß der Emulsion bekannte Treibmittel in Mengen bis zu 30 Gew.-% bezogen auf Polyisocyanat/Wasserglaslösungs-Gemisch, zugesetzt werden.

5. Verfahren nach Anspruch 1 bis 4, dadurch gekennzeichnet, daß der Emulsion Verbindungen mit mindestens einer gegenüber Polyisocyanaten reaktionsfähigen Gruppe in einer Menge bis zu 30 Gew.-%, bezogen auf die Wasserglaslösung, zugesetzt werden.

6. Verfahren nach Anspruch 5, dadurch gekennzeichnet, daß als gegenüber Polyisocyanaten mindestens eine reaktionsfähige Gruppe aufweisende Verbindungen die aus der Polyurethanchemie bekannten Polyhydroxylverbindungen verwendet werden.

7. Verfahren nach Anspruch 6, dadurch gekennzeichnet, daß Polyetherpolyole mit einer OH-Zahl von 50-600 verwendet werden.

8. Verfahren nach Anspruch 1 bis 7, dadurch gekennzeichnet, daß zur Stabilisierung der aus Wasserglaslösungen und mit Polyisocyanaten reagierenden mono- oder polyfunktionellen Verbindungen gebildeten Emulsionen Thixotropiermittel und Emulgatoren zugesetzt werden.

9. Verfahren nach Anspruch 1 bis 8, dadurch gekennzeichnet, daß in die Emulsion Schaumstabilisatoren eingearbeitet werden.

10. Verfahren nach Anspruch 1 bis 9, dadurch gekennzeichnet, daß Komponenten der zu erzeugenden Emulsionen in separaten Behältern einer Mehrkammerpatrone untergebracht und nach Einführung in die Formation unter Zerstörung der Patrone miteinander vermischt werden.

## Claims

1. A process for consolidating and rendering impervious geological rock formations and coal deposits, characterized in that intimately mixing water glass solutions with polyisocyanates selected from the group consisting of (i) polyphenyl-polymethylene polyisocyanates which correspond to the phosgenation products of the aniline/formaldehyde condensation reaction and (ii) derivatives of these polyisocyanates which contain carbodiimide groups, biuret groups, urethan groups or allophanate groups and are liquid at room temperature, introducing this emulsion into said formation or said deposit through

**0 016 262**

boreholes or injection lances under pressure and allowing the emulsion to harden in the said formation or said deposit.

2. A process according to claim 1, characterized in that the weight ratio of polyisocyanate to water glass solution is between 75 : 25 and 15 : 85, preferably from 60 : 40 to 25 : 75.

3. A process according to claim 1 to 2, characterized in that up to 2 % by weight of accelerators known from the polyurethane chemistry, preferably metalloorganic compounds or tertiary amines, are added to the emulsion.

4. A process according to claim 1 to 3, characterized in that known propellants in amounts of up to 30 % by weight, relative to the polyisocyanate/water glass mixture are added to the emulsion.

5. A process acccording to claims 1 to 4, characterized in that compounds with at least one group capable of reacting with polyisocyanates and in an amount of up to 30 % by weight, relative to the water glass solution, are added to the emulsion.

6. A process according to claim 5, characterized in that the polyhydroxy compounds known from polyurethane chemistry are used as compounds having at least one group capable of reacting with polyisocyanates.

7. A process according to claim 6, characterized in that polyether polyols with an OH number of from 50 to 600 are used.

8. A process according to claim 1 to 7, characterized in that thixotropizing agents and emulsifiers are added in order to stabilize the emulsions formed from water glass solutions and uni- or multifunctional compounds reacting with polyisocyanates.

9. A process according to claim 1 to 8, characterized in that froth stabilizing agents are incorporated into the emulsion.

10. A process according to claim 1 to 9, characterized in that components of the emulsions to be formed are kept in separate containers in a multichamber cartridge and after being inserted into the formation are mixed together as the cartridges are destroyed.


**Revendications**

1. Procédé de consolidation et d'étanchéification de formations de roche géologique ainsi que de charbon dans des mines de charbon souterraines, caractérisé en ce qu'on mélange intimement entre eux des solutions de verre soluble et des polyisocyanates choisis parmi (i) des polyphényl-polyméthylène-polyisocyanates, tels qu'obtenus par condensation aniline/formaldéhyde puis phosgénation, et (ii) des dérivés de ces polyisocyanates qui sont liquides à température ambiante et présentent des groupes carbodiimide, biuret, uréthane, ou allophanate, on introduit cette émulsion sous pression dans les formations géologiques à consolider par des trous de sonde ou des lances d'injection et on la fait durcir dans la formation à consolider.

2. Procédé suivant la revendication 1, caractérisé en ce que le rapport pondéral du polyisocyanate à la solution de verre soluble est entre 75 : 25 et 15 : 85, de préférence entre 60 : 40 et 25 : 75.

3. Procédé suivant les revendications 1 et 2, caractérisé en ce qu'on ajoute à l'émulsion jusqu'à 2 % en poids d'accélérateurs connus dans la chimie des polyuréthanes, de préférence des composés organométalliques ou des amines tertiaires.

4. Procédé suivant l'une quelconque des revendications 1 à 3, caractérisé en ce qu'on ajoute à l'émulsion des agents d'expansion connus, dans des quantités allant jusqu'à 30 % en poids par rapport au mélange polyisocyanate/solution de verre soluble.

5. Procédé suivant l'une quelconque des revendications 1 à 4, caractérisé en ce qu'on ajoute à l'émulsion des composés ayant au moins un groupe réactif vis-à-vis des polyisocyanates, en une quantité allant jusqu'à 30 % en poids par rapport à la solution de verre soluble.

6. Procédé suivant la revendication 5, caractérisé en ce qu'on utilise comme composés présentant au moins un groupe réactif vis-à-vis des polyisocyanates les composés polyhydroxylés connus dans la chimie des polyuréthanes.

7. Procédé suivant la revendication 6, caractérisé en ce qu'on utilise des polyétherpolyols ayant un indice d'OH de 50 à 600.

8. Procédé suivant l'une quelconque des revendications 1 à 7, caractérisé en ce que pour la stabilisation des émulsions formées à partir de solutions de verre soluble et de composés mono- ou polyfonctionnels réagissant avec les polyisocyanates, on ajoute des agents thixotropisants et des émulsionnants.

9. Procédé suivant l'une quelconque des revendications 1 à 8, caractérisé en ce que des stabilisants de mousse sont incorporés à l'émulsion.

10. Procédé suivant l'une quelconque des revendications 1 à 9, caractérisé en ce que les constituants de l'émulsion à préparer sont logés dans des récipients séparés d'une cartouche à plusieurs compartiments et sont mélangés entre eux, après introduction de la cartouche dans la formation, par destruction de la cartouche.